Europäisches Patentamt

European Patent Office

Office européen des brevets

(11) Veröffentlichungsnummer: **0 305 737**
**A2**

## (12) EUROPÄISCHE PATENTANMELDUNG

(21) Anmeldenummer: 88112197.4

(22) Anmeldetag: 28.07.88

(51) Int. Cl.⁴: **C08G 77/08** , **C08G 77/10**

(30) Priorität: 31.07.87 DE 3725377

(43) Veröffentlichungstag der Anmeldung:
08.03.89 Patentblatt 89/10

(84) Benannte Vertragsstaaten:
**BE DE ES FR GB NL**

(71) Anmelder: **WACKER-CHEMIE GMBH**
**Prinzregentenstrasse 22**
**D-8000 München 22(DE)**

(72) Erfinder: **Riederer, Manfred, Dr. Dipl.-Chem.**
**Rutenbergstrasse 34**
**D-2650 Bremerhaven(DE)**
Erfinder: **Piehler, Martin**
**Hintermehring 3**
**D-8261 Mehring(DE)**

(54) **Verfahren zum Kondensieren und/oder Äquilibrieren von Organo-(poly)siloxanen.**

(57) Beim Kondensieren und/oder Äquilibrieren von Organo(poly)siloxanen in Gegenwart eines Phosphor, Stickstoff und Chlor enthaltenden Katalysators wird als Phosphor, Stickstoff und Chlor enthaltender Katalysator ein Umsetzungsprodukt mindestens eines Phosphornitridchlorids mit mindestens einem cyclischen Diorganopolysiloxan verwendet.

EP 0 305 737 A2

EP 0 305 737 A2

## Verfahren zum Kondensieren und/oder Äquilibrieren von Organo(poly)siloxanen

Es ist bereits bekannt, Organo(poly)siloxane in Gegenwart eines Phosphor, Stickstoff und Chlor enthaltenden Katalysators zu kondensieren und/oder zu äquilibrieren. Hierzu sei z.B. auf US 4 564 693 (ausgegeben 14. Januar 1986, M. Riederer, Wacker-Chemie GmbH) verwiesen.

Es bestand nun die Aufgabe, ein Verfahren zum Kondensieren und/oder Äquilibrieren von Organo(poly)-siloxanen in Gegenwart eines Phosphor, Stickstoff und Chlor enthaltenden Katalysators bereitzustellen, das keine Mitverwendung von zu entsorgendem Lösungsmittel benötigt, trotzdem eine sehr gute Verteilung des Katalysators in dem zu kondensierenden und/oder zu äquilibrierenden Organo(poly)siloxan ermöglicht und noch wirksamer ist als die bisher als Katalysatoren beim Kondensieren und/oder Äquilibrieren von Organo-(poly)siloxanen bekannten Phosphor, Stickstoff und Chlor enthaltenden Verbindungen. Diese Aufgabe wird durch die Erfindung gelöst.

Gegenstand der Erfindung ist ein Verfahren zum Kondensieren und/oder Äquilibrieren von Organo-(poly)siloxanen in Gegenwart eines Phosphor, Stickstoff und Chlor enthaltenden Katalysators, dadurch gekennzeichnet, daß der Phosphor, Stickstoff und Chlor enthaltende Katalysator ein Umsetzungsprodukt mindestens eines Phosphornitridchlorids mit mindestens einem cyclischen Diorganopolysiloxan ist.

Als Organo(poly)siloxane können auch bei dem erfindungsgemäßen Verfahren beliebige Organe(poly)-siloxane mit Si-gebundenen Hydroxylgruppen eingesetzt werden, die bei den bisher bekannten Verfahren zum Kondensieren und/oder Äquilibrieren von Organo(poly)siloxanen mit Si-gebundenen Hydroxylgruppen in Gegenwart eines Phosphor, Stickstoff und Chlor enthaltenden Katalysators eingesetzt werden konnten.

Beispiele für solche Organo(poly)siloxane mit Si-gebundenen Hydroxylgruppen sind insbesondere solche der Formel

$$HO(SiR_2O)_nH ,$$

worin R gleiche oder verschiedene, einwertige, SiC-gebundene organische Reste oder Wasserstoff bedeutet mit der Maßgabe, daß an jedes Siliciumatom, an das Wasserstoff unmittelbar gebunden ist, auch ein einwertiger, SiC-gebundener organischer Rest gebunden ist, und n eine ganze Zahl im Wert von mindestens 1, vorzugsweise mindestens 2, ist.

Vorzugsweise hat n einen solchen Wert, daß die durchschnittliche Viskosität der zu kondensierenden und/oder zu äquilibrierenden Organo(poly)siloxane höchstens 1000 $mm^2.s^{-1}$ bei 25°C beträgt.

Obwohl durch die obige, häufig verwendete Formel nicht dargestellt, können bis zu insgesamt 5 Molprozent der Einheiten der Formel $SiR_2O$ durch andere, meist jedoch lediglich als mehr oder weniger schwer vermeidbare Verunreinigungen vorliegende Siloxaneinheiten, wie solche der Formel $RSiO_{3/2}$, $R_3SiO_{1/2}$, wobei R jeweils die oben dafür angegebene Bedeutung hat, oder $SiO_{4/2}$ oder Gemische aus mindestens zwei solcher anderen Siloxan-Einheiten ersetzt sein.

Bei dem erfindungsgemäßen Verfahren kann eine Art von Organo(poly)siloxan mit Si-gebundenen Hydroxylgruppen eingesetzt werden. Es können aber auch Mischungen aus mindestens zwei verschiedenen Arten derartiger Organo(poly)siloxane eingesetzt werden.

Anstelle von Organo(poly)siloxanen mit Si-gebundenen Hydroxylgruppen oder im Gemisch mit derartigen Organo(poly)siloxanen können aber cyclische auch Organopolysiloxane, insbesondere solche der Formel

$$(R_2SiO)_m ,$$

worin R die oben dafür angegebene Bedeutung hat und m eine ganze Zahl im wert von 3 bis 12, insbesondere 4 bis 8, besonders bevorzugt 4, ist, bei dem erfindungsgemäßen Verfahren eingesetzt werden.

Vorzugsweise enthalten die SiC-gebundenen organischen Reste in den bei dem erfindungsgemäßen Verfahren eingesetzten Organo(poly)siloxanen und damit auch die organischen Reste R in den oben angegebenen Formeln höchstens 18 Kohlenstoffatome je Rest. Beispiele für derartige Reste sind Kohlenwasserstoffreste, wie Alkylreste, z.B. der Methyl-, Ethyl-, n-Propyl-, Isopropyl-, n-Butyl- und sec.-Butylrest sowie Octadecylreste; Kohlenwasserstoffreste mit aliphatischer Mehrfachbindung, z.B. der Vinyl- und Allylrest; Arylreste, z.B. der Phenylrest und Xenylreste; Alkarylreste, z.B. Tolylreste; und Aralkylreste, z.B. der Benzylrest. Diese Kohlenwasserstoffreste können unter den Reaktionsbedingungen gegenüber Wasser und dem erfindungsgemäß verwendeten Katalysator inerte Substituenten aufweisen. Weitere Beispiele für einwertige, SiC-gebundene organische Reste in den bei dem erfindungsgemäßen Verfahren eingesetzten

2

Organo(poly)siloxanen und damit auch für organische Reste R in den oben angegebenen Formeln sind somit einwertige, halogenierte Kohlenwasserstoffreste, wie Halogenalkylreste, z.B. der 3,3,3-Trifluorpropylrest, und Halogenarylreste, z.B. der o-, p- oder m-Chlorphenylrest; aus Kohlenstoff-, Wasserstoff-, Ethersauerstoff- und Fluoratome(n) aufgebaute, einwertige aliphatische Reste, z.B. der 1,1,2,2,3,3-Hexafluorpropyloxypropylrest und der 1,1,2,2-Tetrafluorethoxypropylrest, und Acyloxyalkylreste, wie der gamma-Acryloxypropylrest und gamma-Methacryloxypropylrest.

Schon wegen der leichteren Zugänglichkeit sind jedoch vorzugsweise mindestens 80 % der Anzahl der organischen Reste in in den bei dem erfindungsgemäßen Verfahren eingesetzten Organo(poly)siloxanen und damit auch der organischen Reste R in den oben angegebenen Formeln Methylreste.

Die für die Herstellung der erfindungsgemäß verwendeten Katalysatoren verwendeten Phosphornitridchloride können z.B. solche sein, die durch Umsetzung von 400 Gewichtsteilen Phosphorpentachlorid mit 130 Gewichtsteilen Ammoniumchlorid erhältlich sind (vgl. z.B. "Berichte der Deutschen Chemischen Gesellschaft", 57. Jahrgang, 1924, Seite 1345), und/oder solche sein, die durch Umsetzung von 2 Mol Phosphorpentachlorid mit 1 Mol Ammoniumchlorid erhältlich sind (vgl. z.B. US 3 839 388, ausgegeben 1. Okt. 1974, S. Nitzsche et al., Wacker-Chemie GmbH). Bevorzugt sind Phosphornitridchloride der letzteren Art.

Die für die Herstellung der erfindungsgemäß verwendeten Katalysatoren bevorzugt verwendeten cyclischen Diorganopolysiloxane können durch die Formel

$$(R^1_2 SiO)_m$$

wiedergegeben werden, worin $R^1$ gleiche oder verschiedene, einwertige, SiC-gebundene organische Reste bedeutet und m die oben dafür angegebene Bedeutung hat.

Alle Ausführungen über und Beispiele für organische Reste R gelten auch für die Reste $R^1$.

Insbesondere wegen der leichteren Zugänglichkeit ist als mit mindestens einem Phosphornitridchlorid umzusetzendes cyclisches Diorganopolysiloxan Octamethylcyclotetrasiloxan besonders bevorzugt.

Vorzugsweise wird cyclisches Diorganopolysiloxan in Mengen von 20 bis 25 Grammatom Siliciumatomen in diesem Diorganopolysiloxan je Grammatom Phosphor im Phosphornitridchlorid eingesetzt.

Vorzugsweise wird die Umsetzung von Phosphornitridchlorid mit cyclischem Diorganopolysiloxan durch Erwärmen eines Gemisches der beiden Reaktionsteilnehmer auf 120° bis 180° C, insbesondere 130° bis 150° C, und beim Druck der umgebenden Atmosphäre, also bei 1020 hPa (abs.) oder etwa 1020 hPa (abs.) durchgeführt. Falls erwünscht, können aber auch höhere oder niedrigere Temperaturen und/oder höhere oder niedrigere Drücke angewendet werden.

Umsetzungsprodukte eines Phosphornitridchlorids mit einem cyclischen Diorganopolysiloxan sind bereits bekannt. Hierzu wird auf H.R. Allcock et al., in "Macromolecules", Vol. 18 (1985), Seite 139 bis 144 verwiesen.

Vorzugsweise werden die erfindungsgemäß verwendeten Umsetzungsprodukte mindestens eines Phosphornitridchlorids mit mindestens einem cyclischen Diorganopolysiloxan in Mengen von 0,0001 bis 0,1 Gewichtsprozent Chlor in diesen Umsetzungsprodukten, bezogen auf das Gesamtgewicht der zu polymerisierenden und/oder zu äquilibrierenden Organo(poly)siloxane, eingesetzt.

Bei dem erfindungsgemäßen Verfahren können Organosiliciumverbindungen, welche die Kettenlänge regeln, mitverwendet werden. Dabei können beliebige, die Kettenlänge regelnde Organosiliciumverbindungen eingesetzt werden, die auch bei den bisher bekannten Verfahren zum Kondensieren und/oder Äquilibrieren von Organo(poly)siloxanen in Gegenwart eines Phosphor, Stickstoff und Chlor enthaltenden Katalysators mitverwendet werden konnten. Beispiele für derartige, die Kettenlänge regelnde Organosiliciumverbindungen sind insbesondere solche der Formel

$$R^2(SiR^2_2 O)_z SiR^2_3$$

worin $R^2$ gleiche oder verschiedene, einwertige Kohlenwasserstoffreste bedeutet und z eine ganze Zahl im Wert von 1 bis 50 ist. Einzelne Beispiele für derartige Verbindungen sind durch Trimethylsiloxygruppen endblockiertes Dimethylpolysiloxan mit einer Viskosität bei 25° C von 20 mm$^2$.s$^{-1}$, Hexamethyldisiloxan und 1,3-Divinyl-1,1,3,3-tetramethyldisiloxan.

Die Menge von die Kettenlänge regelnder Organosiliciumverbindung hängt, wie dem Fachmann wohlbekannt, von der gewünschten Höhe des Molekulargewichts ab. Je größer die Menge von der Kettenlänge regelnder Organosiliciumverbindung ist, desto niedriger ist die Viskosität und damit auch das Molekulargewicht der Organopolysiloxane nach der Polymerisation und/oder Äquilibrierung.

Vorzugsweise werden bei dem erfindungsgemäßen Verfahren die Kettenlänge regelnde Organosiliciumverbindungen mitverwendet.

Das Kondensieren und/oder Äquilibrieren der Organo(poly)siloxane wird vorzugsweise bei 100° bis 200° C durchgeführt.

Um die Abführung des bei der Kondensation gebildeten Wassers zu erleichtern, wird das Kondensieren und/oder Äquilibrieren der Organo(poly)siloxane vorzugsweise bei einem Druck unterhalb 800 hPa (abs.) durchgeführt. Das Kondensieren, insbesondere aber das Äquilibrieren, ist aber auch bei höheren Drücken durchführbar.

Nach dem Kondensieren und/oder Äquilibrieren der Organo(poly)siloxane kann der erfindungsgemäß verwendete Katalysator bzw. ein Umsetzungsprodukt, welches aus diesem Katalysator durch Umsetzung mit zu kondensierendem und/oder zu äquilibrierendem Organo(poly)siloxan gebildet wurde und ebenfalls das Kondensieren und/oder Äquilibrieren von Organo(poly)siloxanen fördert, durch Zugabe von z.B. Triisononylamin, n-Butyllithium oder Hexamethyldisilazan unwirksam gemacht werden, um die bei dem erfindungsgemäßen Verfahren erhaltenen Organopolysiloxane gegenüber Viskositätsänderungen zu stabilisieren.

Die erfindungsgemäß hergestellten, linearen Organopolysiloxane können für alle Zwecke verwendet werden, bei denen auch die nach bisher bekannten Verfahren durch Kondensieren und/oder Äquilibrieren von Organo(poly)siloxanen erzeugten, linearen Organopolysiloxane eingesetzt werden konnten, z.B. als Fadengleitmittel, zur Herstellung von Organopolysiloxanelastomeren, wobei die Vernetzung je nach Art der endständigen Einheiten der linearen Organopolysiloxane durch Kondensation, Anlagerung von Si-gebundenem Wasserstoff an z.B. SiC-gebundene Vinylgruppen oder durch Radikalbildung erfolgen kann, und zur Herstellung von klebrige Stoffe abweisenden Überzügen.

Das in den folgenden Beispielen verwendete Phosphornitridchlorid wurde wie folgt hergestellt:

Ein Gemisch aus 417 g (2 Mol) Phosphorpentachlorid und 53,5 g (1 Mol) Ammoniumchlorid in 1000 ml Tetrachlorethan wird 12 Stunden zum Sieden unter Rückfluß erwärmt. Aus der so erhaltenen, hellgelben Lösung werden bei 160° C und unter Erniedrigung des Druckes bis auf etwa 1,33 hPa (abs.) die unter diesen Bedingungen siedenden Bestandteile abdestilliert. Als Rückstand wird ein Phosphornitridchlorid in Form gelblicher Kristalle erhalten.

Beispiel 1

a) 116 g des Phosphornitridchlorids, dessen Herstellung vorstehend beschrieben wurde, werden mit 1460 g (5 Mol je Grammatom Phosphor im Phosphornitridchlorid) Octamethylcyclotetrasiloxan vermischt. Die so erhaltene Mischung wird unter Rühren und unter Stickstoff auf 140° C erwärmt. Nach etwa 30 Minuten sind die Phosphornitridchlorid-Kristalle verschwunden und es hat sich eine zitronengelbe Flüssigkeit gebildet.

b) Eine Mischung aus 200 g eines in den endständigen Einheiten je eine Si-gebundene Hydroxygruppe aufweisenden Dimethylpolysiloxans mit einer Viskosität bei 25° C von 140 $mm^2.s^{-1}$, 6,8 g durch Trimethylsiloxygruppen endblockierten Dimethylpolysiloxans mit einer Viskosität bei 25° C von 20 $mm^2.s^{-1}$ und 82 mg des Umsetzungsprodukts von einem Phosphornitridchlorid mit Octamethylcyclotetrasiloxan, dessen Herstellung vorstehend beschrieben wurde, wird unter Rühren bei 1 hPa (abs.) auf 150° C erwärmt. Bevor 5 Minuten verstrichen sind, wird ein durch Trimethylsiloxygruppen endblockiertes Dimethylpolysiloxan mit einer Viskosität bei 25° C von 30 000 $mm^2.s^{-1}$ erhalten.

Beispiel 2

Zu 200 g des in den endständigen Einheiten je eine Si-gebundene Hydroxylgruppe aufweisenden Dimethylpolysiloxans mit einer Viskosität bei 25° C von 140 $mm^2.s^{-1}$, die auf 150° C erwärmt sind, werden unter Rühren 21 mg des Umsetzungsprodukts von einem Phosphornitridchlorid mit Octamethylcyclotetrasiloxan, dessen Herstellung in Beispiel 1 unter a) beschrieben wurde, gegeben. Dann wird der Druck im Reaktionsgefäß auf 130 hPa (abs.) erniedrigt. Bevor 2 Minuten verstrichen sind, wird ein in den endständigen Einheiten je eine Si-gebundene Hydroxylgruppe aufweisendes Dimethylpolysiloxan mit einer Viskosität bei 25° C von 80 000 mPa.s erhalten.

Beispiel 3

In einem Doppelschneckenkneter mit einer bei 150°C und 6,7 hPa (abs.) gehaltenen, 140 cm langen Reaktionszone werden kontinuierlich 100 1 je Stunde des in den endständigen Einheiten je eine Si-gebundene Hydroxylgruppe aufweisenden Dimethylpolysiloxans mit einer Viskosität bei 25°C von 140 mm².s⁻¹ sowie je 100 1 dieses Dimethylpolysiloxans 220 ml des Umsetzungsprodukts von einem Phosphornitridchlorid mit Octamethylcyclotetrasiloxan, dessen Herstellung in Beispiel 1 unter a) beschrieben wurde, eingespeist. Mittels einer Zahnradpumpe wird im Austragsrohr das so erhaltene Organopolysiloxan, das noch eine Temperatur von fast 150°C aufweist, mit 220 ml je Stunde einer 1,5 gewichtsprozentigen Lösung von Triisononylamin in einem Gemisch aus cyclischen Dimethylpolysiloxanen mit 3 bis 8 Siliciumatomen je Molekül, wobei der Anteil von Octamethylcyclotetrasiloxan den Anteil der übrigen cyclischen Dimethylpolysiloxane überwiegt, vermischt. Das so erhaltene, in den endständigen Einheiten je eine Si-gebundene Hydroxylgruppe aufweisende Dimethylpolysiloxan hat bei 25°C eine Viskosität von 80 000 mm².s⁻¹.

Beispiel 4

In den Doppelschneckenkneter mit der bei 150°C und 6,7 hPa (abs.) gehaltenen, 140 cm langen Reaktionszone werden kontinuierlich 100 kg je Stunde des in den endständigen Einheiten je eine Si-gebundene Hydroxylgruppe aufweisenden Dimethylpolysiloxans mit einer Viskosität bei 25°C von 140 mm².s⁻¹, 6,25 kg je Stunde des durch Trimethylsiloxygruppen endblockierten Dimethylpolysiloxans mit einer Viskosität bei 25°C von 20 mm².s⁻¹ und 220 ml des Umsetzungsprodukts von einem Phosphornitridchlorid mit Octamethylcyclotetrasiloxan, dessen Herstellung in Beispiel 1 unter a) beschrieben wurde, eingespeist. Mittels einer Zahnradpumpe wird im Austragsrohr das so erhaltene Organopolysiloxan, das noch eine Temperatur von fast 150°C aufweist, mit 220 ml je Stunde einer Lösung, die aus 17 g n-Butyllithium in 9,65 g n-Pentan und 2086,5 g durch Trimethylsiloxygruppen endblockierten Dimethylpolysiloxans mit einer Viskosität bei 25°C von 350 mm².s⁻¹ vermischt. Das so erhaltene durch Trimethylsiloxygruppen endblockierte Dimethylpolysiloxan hat bei 25°C eine Viskosität von 20 000 mPa.s.

Beispiel 5

Zu 200 g Octamethylcyclotetrasiloxan, die auf 130°C erwärmt sind, werden unter Rühren 0,55 ml des Umsetzungsprodukts von einem Phosphornitridchlorid mit Octamethylcyclotetrasiloxan, dessen Herstellung in Beispiel 1 unter a) beschrieben wurde, gegeben. Die Polymerisation des Octamethylcyclotetrasiloxans setzt augenblicklich ein. Nach bestimmten Zeitabschnitten wird eine Probe aus dem Reaktionsgemisch entnommen und die Viskosität bestimmt.

Folgende Werte werden erhalten:

| Zeit [Minuten nach Reaktionsbeginn] | Viskosität [mm².s⁻¹ bei 25°C] |
|---|---|
| 0 | 2 |
| 16 | 132 750 |
| 21 | 162 950 |
| 40 | Festpolymer |

Vergleichsversuch

Die im Beispiel 1 unter b) beschriebene Arbeitsweise wird wiederholt mit der Abänderung, daß anstelle 82 mg des Umsetzungsprodukts von einem Phosphornitridchlorid mit Octamethylcyclotetrasiloxan, dessen Herstellung im Beispiel 1 unter a) beschrieben wurde, 6,03 mg Phosphornitridchlorid in 0,5 ml Trichlorpropan zugegeben werden. Nach 10 Minuten wird ein durch Trimethylsiloxygruppen endblockiertes Dimethylpolysiloxan mit einer Viskosität von 30 000 mm².s⁻¹ bei 25°C erhalten.

**Ansprüche**

1. Verfahren zum Kondensieren und/oder Äquilibrieren von Organo(poly)siloxanen in Gegenwart eines Phosphor, Stickstoff und Chlor enthaltenden Katalysators, dadurch gekennzeichnet, daß der Phosphor, Stickstoff und Chlor enthaltende Katalysator ein Umsetzungsprodukt mindestens eines Phosphornitridchlorids mit mindestens einem cyclischen Diorganopolysiloxan ist.

Verfahren nach Anspruch 1, dadurch gekennzeichnet, daß das Phosphornitridchlorid solches ist, das durch Umsetzung von 2 Mol Phosphorpentachlorid mit 1 Mol Ammoniumchlorid erhältlich ist, und das cyclische Diorganopolysiloxan Octamethylcyclotetrasiloxan ist.